# EUROPÄISCHE PATENTSCHRIFT

(11) **EP 3 558 753 B1**
(45) Veröffentlichungstag und Bekanntmachung des Hinweises auf die Patenterteilung: **29.01.2025**
(21) Anmeldenummer: 17842413.1
(22) Anmeldetag: 20.12.2017
(51) Int. Cl.: B60R 16/03, G01C 21/36, G06F 1/32, G09G 5/00

(54) **NIEDRIG-ENERGIE-BETRIEB VON KRAFTFAHRZEUGFUNKTIONEN WÄHREND DES BETRIEBES DES KRAFTFAHRZEUGES**
LOW-ENERGY OPERATION OF MOTOR VEHICLE FUNCTIONS DURING THE OPERATION OF THE MOTOR VEHICLE
FONCTIONNEMENT À BASSE ÉNERGIE DE FONCTIONS DE VÉHICULE AUTOMOBILE PENDANT LE FONCTIONNEMENT DU VÉHICULE AUTOMOBILE

(30) Priorität: 23.12.2016 DE 102016015511
(43) Veröffentlichungstag der Anmeldung: 30.10.2019
(73) Patentinhaber: Bayerische Motoren Werke Aktiengesellschaft, 80809 München (DE)
(72) Erfinder: STRIEBEL, Reiner, 78479 Reichenau (DE); FRANZE, Daniel, 41462 Neuss (DE); SPÖRLEIN, Georg, 72296 Schopfloch (DE); REICHERT, Hans-Peter, 72359 Dotternhausen (DE)
(86) Internationale Anmeldenummer: PCT/DE2017/000430
(87) Internationale Veröffentlichungsnummer: WO 2018/113812

(56) Entgegenhaltungen:
- WO-A2-2012/061625
- JP-A- 2010 117 289
- JP-A- 2011 128 341
- US-A1- 2009 306 890
- US-A1- 2014 005 926
- US-A1- 2015 116 336
- US-A1- 2016 231 123
- US-A1- 2020 178 801

## Beschreibung

Die vorliegende Erfindung betrifft einen elektrischen Niedrig-Energie-Betrieb von Kraftfahrzeugfunktionen während des Betriebes des Kraftfahrzeuges.

Im Zuge der immer komplexer werdenden Funktionen des Infotainmentsystems und des damit einhergehenden zunehmenden Energieverbrauchs solcher Systeme ist es erforderlich, Gegenmaßnahmen zur Energieverbrauchsreduzierung zu treffen. Durch entsprechende Maßnahmen können beispielsweise zum einen die Reichweite von E-Fahrzeugen erhöht und zum anderen der CO2-Ausstoß von konventionellen Fahrzeugen reduziert werden.

Derzeit werden in einer sogenannten Headunit des Kraftfahrzeuges Infotainmentdaten ermittelt und visuell auf einem Informationsdisplay dargestellt. Wird das Informationsdisplay vom Fahrzeugnutzer nicht benötigt, kann er es abschalten. Dabei wird das Informationsdisplay jedoch lediglich schwarz geschaltet, es bleibt somit aktiviert und alle anzuzeigenden Informationen, wie beispielsweise eine aktuelle Radiosenderliste beispielsweise bei Nutzung eines Digitalradios oder eine aktuelle Navigationskarte bei Nutzung einer Fahrzeugnavigation werden weiterhin errechnet und visuell auf dem Informationsdisplay dargestellt. Da das Display schwarz geschaltet ist, bekommt der Fahrzeugnutzer davon nichts mit. Dadurch ist es möglich, dass zu dem Zeitpunkt, zu dem der Fahrzeugnutzer das Informationsdisplay wieder aktiviert, die aktuellen Informationen sofort sichtbar auf dem Informationsdisplay visuell dargestellt sind. Dies führt jedoch zu einem hohen Energieverbrauch, sowohl im Display, in den Prozessoren der Headunit als auch in Fahrzeugfunktionen beziehungsweise Fahrzeugsystemen, die den Prozessoren der Headunit Informationen zuarbeiten.

Daher wäre es wünschenswert eine Möglichkeit bereitzustellen, für den Fall, in welchem das Informationsdisplay während einer Nutzung des Kraftfahrzeuges von dem Nutzer nicht benötigt wird, den elektrischen Energieverbrauch entsprechend zu senken.

Die US 2009 306 890 Al offenbart die Ansteuerung einer Zeichensteuerungs- und Speichereinheit durch eine CPU gemäß einer Operation, die an einer Operationseinheit ausgeführt wird. Um keine Navigationsanzeige an einer Überwachungseinheit auszuführen, steuert die CPU einen Schalter in einen Aus-Zustand, während eines Zeitraums, in dem die CPU diese Navigationsanzeige nicht durchführt und stoppt die Zufuhr von elektrischer Energie zu einer Sekundärspeichereinheit, um den Betrieb dieser Sekundärspeichereinheit zu stoppen, wodurch der Verbrauch der Sekundärspeichereinheit verringert wird.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens, sowie mittels einer Vorrichtung und mittels eines Kraftfahrzeuges gemäß nebengeordneten Ansprüchen.

Der Gegenstand des Hauptanspruches betrifft dabei ein Verfahren für einen elektrischen Niedrig-Energie-Betrieb von Kraftfahrzeugfunktionen während des Betriebes eines Kraftfahrzeuges. Dabei weist das Kraftfahrzeug ein Informationsdisplay auf. Und dabei weist das Verfahren auf: Deaktivieren des Informationsdisplays des Kraftfahrzeuges. Degradieren einer Funktionalität mindestens einer Fahrzeugkomponente, welche das Informationsdisplay für eine visuelle Darstellung von spezifischen Informationen der Fahrzeugkomponente nutzt. Und Deaktivieren einer Graphik-Prozessor-Einheit des Kraftfahrzeuges, als eine Energiesparmaßnahme. Dabei ist die Graphik-Prozessor-Einheit dazu eingerichtet, die spezifischen Informationen der Fahrzeugkomponente derart aufzubereiten, dass diese Informationen auf dem Informationsdisplay visuell darstellbar sind. Und dabei erfolgt das Degradieren der Funktionalität der Fahrzeugkomponente derart, dass die Fahrzeugkomponente ihre zugehörigen spezifischen Informationen weiterhin funktionsgemäß ermittelt und für eine Graphikverarbeitung vorbereitet vorhält.

Verfahrensschritte können dabei automatisiert mittels einer geeigneten Automatisierungsvorrichtung ausgeführt werden.

Ein Informationsdisplay im Sinne der Erfindung meint dabei eine elektronische Anzeigevorrichtung zur Darstellung visueller graphischer Inhalte. Vorzugsweise weist die elektronische Anzeigevorrichtung eine Vielzahl von Farbmöglichkeiten auf und eine sinnvolle Anzahl von Pixeln, dass ein Fahrzeugnutzer sowohl Textinformationen als auch graphisch komplexe Informationen, wie beispielsweise eine Navigationskarte, scharf ablesen kann. Bevorzugt weist die elektronische Anzeigevorrichtung eine Bildschirmdiagonale von mindestens 5" auf.

Ein Deaktivieren des Informationsdisplays im Sinne der Erfindung meint dabei ein Ausschalten des Informationsdisplays. Vorzugsweise erfolgt das Deaktivieren derart, dass das Informationsdisplay bei erneuter Benutzung schnell wieder zur Verfügung steht.

Dies kann beispielsweise dadurch gewährleistet werden, indem ein spezieller Stand-By PIN am Display-Controller vorgesehen ist, der entsprechend beschaltet werden kann, um das Informationsdisplay entsprechend mit geringer Leistungsaufnahme betreiben beziehungsweise ansteuern zu können. Dazu kann eine separate Spannungsebene beziehungsweise elektrische Leitung vorgesehen werden. Somit kann das Informationsdisplay ausgeschaltet werden und ist schnell wieder aktivierbar.

Eine Fahrzeugkomponente im Sinne der Erfindung meint dabei eine Vorrichtung, ein System und/oder eine Software, welche spezifische Informationen bereitstellt, die nach einer graphischen Aufbereitung auf dem Informationsdisplay dargestellt werden können. Dabei erfolgt das Rendern der spezifischen Informationen, um diese dann auf dem Informationsdisplay adäquat darstellen zu können, in einer Graphik-Prozessor-Einheit (GPU), die in der Regel nicht Teil der Fahrzeugkomponente selbst ist.

Spezifische Informationen der Fahrzeugkomponente des Kraftfahrzeuges im Sinne der Erfindung meint dabei Informationen, die adäquat aufbereitet, auf einem Informationsdisplay visuell dargestellt werden können, um dem Fahrzeugnutzer diejenigen Informationen anzeigen zu können, die er von einer entsprechenden Funktionalität dieser Fahrzeugkomponente erwartet und/oder erwarten kann. Insbesondere handelt es sich bei den spezifischen Informationen um Informationen aus dem Bereich des Fahrzeuginfotainments.

Eine Graphik-Prozessor-Einheit im Sinne der Erfindung meint dabei eine Vorrichtung, welche dazu eingerichtet ist, darzustellende digitale Informationen zu rendern, um diese anschließend auf dem digitalen Informationsdisplay darstellen zu können. Im Allgemeinen wird eine solche Vorrichtung auch mit ,GPU' abgekürzt, da sie eine spezialisierte Form einer CPU darstellt.

Ein für eine Graphikverarbeitung vorbereitetes Vorhalten im Sinne der Erfindung meint dabei, dass die entsprechenden spezifischen Informationen derart aufbereitet sind, dass sie jederzeit bei Bedarf umgehend für eine graphische Darstellung genutzt werden können und dazu in einem Computerdatenspeicher, auch RAM genannt, vorgehalten werden, wobei nur noch letzte Aufbereitungsschritte durch die GPU und eventuell von einem Signalwandler durchzuführen sind.

Durch die erfindungsgemäße Lehre wird der Vorteil erreicht, dass Verbraucher von elektrischer Energie des Infotainmentsystems des Kraftfahrzeuges gezielt abgeschaltet werden können, um elektrische Energie zu sparen, solange diese während der Fahrzeugnutzung durch einen Fahrzeugnutzer nicht verwendet werden, ohne die vom Fahrzeugnutzer bei Bedarf erwarteten Infotainmentfunktionalitäten neu starten und initialisieren zu müssen.

Der Gegenstand eines nebengeordneten Anspruches betrifft dabei eine Vorrichtung für einen elektrischen Niedrig-Energie-Betrieb von Kraftfahrzeugfunktionen während des Betriebes eines Kraftfahrzeuges. Dabei weist das Kraftfahrzeug ein Informationsdisplay auf. Und dabei weist die Vorrichtung auf: Ein Deaktivierungsmittel, zum Deaktivieren des Informationsdisplays des Kraftfahrzeuges. Ein Degradierungsmittel, zum Degradieren einer Funktionalität mindestens einer Fahrzeugkomponente, welche das Informationsdisplay für eine visuelle Darstellung von spezifischen Informationen der Fahrzeugkomponente nutzt. Und ein Deaktivierungsmittel, zum Deaktivieren einer Graphik-Prozessor-Einheit des Kraftfahrzeuges, als eine Energiesparmaßnahme, wobei die Graphik-Prozessor-Einheit dazu eingerichtet ist, die spezifischen Informationen der Fahrzeugkomponente derart aufzubereiten, dass diese Informationen auf dem Informationsdisplay visuell darstellbar sind. Und dabei ist die Vorrichtung dazu eingerichtet, ein erfindungsgemäßes Verfahren auszuführen.

Durch die erfindungsgemäße Lehre wird der Vorteil erreicht, dass eine Vorrichtung bereitgestellt werden kann, die es erlaubt Verbraucher von elektrischer Energie des Infotainmentsystems des Kraftfahrzeuges gezielt abzuschalten, um elektrische Energie zu sparen, solange diese während der Fahrzeugnutzung durch einen Fahrzeugnutzer nicht verwendet werden und dabei sicherzustellen, dass die erwarteten Infotainmentfunktionen bei Bedarf umgehend aktualisiert bereitstehen.

Der Gegenstand eines weiteren nebengeordneten Anspruches betrifft dabei ein Kraftfahrzeug. Das Kraftfahrzeug weist eine Fahrzeugkomponente auf. Dabei ist die Fahrzeugkomponente dazu eingerichtet, spezifische Informationen bereitzustellen. Ferner weist das Kraftfahrzeug ein Informationsdisplay auf. Dabei ist das Informationsdisplay dazu eingerichtet, die spezifischen Informationen der Fahrzeugkomponente graphisch darzustellen. Und ferner weist das Kraftfahrzeug eine erfindungsgemäße Vorrichtung auf. Und dabei ist das Kraftfahrzeug dazu eingerichtet, ein erfindungsgemäßes Verfahren auszuführen.

Durch die erfindungsgemäße Lehre wird der Vorteil erreicht, dass ein Kraftfahrzeug bereitgestellt werden kann, das es erlaubt Verbraucher von elektrischer Energie des Infotainmentsystems des Kraftfahrzeuges gezielt abzuschalten, um elektrische Energie zu sparen, solange diese während der Fahrzeugnutzung durch einen Fahrzeugnutzer nicht verwendet werden und dabei sicherzustellen, dass die erwarteten Infotainmentfunktionen bei Bedarf umgehend aktualisiert bereitstehen.

Der Gegenstand eines weiteren nebengeordneten Anspruches betrifft dabei ein Computerprogrammprodukt für eine Vorrichtung und/oder ein Kraftfahrzeug, welches nach einem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft dabei einen Datenträger aufweisend irgendein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen, Systeme und/oder Kraftfahrzeuge verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden. Entsprechende Verfahrensabschnitte können zu entsprechenden Vorrichtungseigenschaften führen und umgekehrt, so dass, sofern der Kontext dies nicht explizit ausschließt, ein Wechsel eines Verfahrensmerkmales in ein Vorrichtungsmerkmal ermöglicht wird und umgekehrt.

Nachfolgend werden weitere exemplarische Ausgestaltungen des erfindungsgemäßen Verfahrens erläutert.

Entsprechend einer ersten exemplarischen Ausgestaltung weist das Verfahren auf, dass das für eine Graphikverarbeitung vorbereitete Vorhalten der spezifischen Informationen derart erfolgt, dass die spezifischen Informationen bei Bedarf direkt für die visuelle Darstellung auf dem Informationsdisplay renderbar sind.

Das für die Graphikverarbeitung vorbereitete Vorhalten im Sinne der Erfindung meint dabei, dass die entsprechenden spezifischen Informationen derart aufbereitet sind, dass sie jederzeit bei Bedarf an die GPU zum direkten Rendern übermittelt werden können.

Die gerenderten Daten müssen anschließend lediglich in eine Graphikpipeline geführt werden und eventuell noch mittels eines Signalwandlers beispielsweise von HDMI in LVDS zur direkten Darstellung im Informationsdisplay umgewandelt werden. Das Befüllen der Graphikpipeline dauert dabei in der Regel lediglich wenige Mikrosekunden bis zu wenigen Millisekunden.

Das Rendern der spezifischen Informationen kann dabei innerhalb von Millisekunden erfolgen.

Im deaktivierten Modus des Informationsdisplays kann es daher sinnvoll sein, Rendering Applikationen mitzuteilen, dass auf der GPU kein Rendern mehr statt findet, wodurch ein Befüllen der Pipeline nicht mehr notwendig ist und die Pipeline geleert vorgehalten werden kann.

Der Signalwandler kann dabei beispielsweise ein sogenannter IF-Baustein sein. Wird solch ein Signalwandler benötigt, so kann auch dieser im Deaktivierten Modus des Informationsdisplays beispielsweise in einem Stand-By-Modus gehalten werden, um weitere elektrische Energie einzusparen.

Diese Ausgestaltung weist den Vorteil auf, dass aktuelle Informationen umgehend nach einem erneuten Einschalten beziehungsweise Aktivieren des Informationsdisplays als visuelle Information bereitstehen.

Entsprechend einer weiteren exemplarischen Ausgestaltung weist das Verfahren ferner ein Monitoren des Informationsdisplays auf, derart, dass das Deaktivieren des Informationsdisplays vorgenommen wird, falls das Monitoren ergibt, dass das Informationsdisplay nicht genutzt wird.

Somit muss nicht ein Deaktivieren beziehungsweise Abschalten des Informationsdisplays abgewartet werden, sondern das Kraftfahrzeug kann selbständig feststellen, ob das Informationsdisplay derzeit nicht genutzt wird und dieses selbständig deaktivieren. Dies kann beispielsweise durch Beobachten des Verhaltens, wie beispielsweise der Augenbewegungen, des Fahrzeugnutzers festgestellt werden. Ferner kann dies beispielsweise auch dadurch festgestellt werden, dass das Infotainmentsystem aktuell keine Aufgabe vom Fahrzeugnutzer erhalten hat.

Diese Ausgestaltung weist den Vorteil auf, dass dadurch noch mehr elektrische Energie während der Fahrzeugnutzung eingespart werden kann.

Entsprechend einer weiteren exemplarischen Ausgestaltung weist die Fahrzeugkomponente eine Navigationsvorrichtung auf, und die spezifischen Informationen weisen Navigationskarteninformationen auf.

Diese Ausgestaltung weist den Vorteil auf, dass die Erfindung besonders auf rechenintensive und häufig vom Fahrzeugnutzer genutzte Anwendungen des Infotainmentsystems zum Einsparen elektrischer Energie angewendet werden kann.

Entsprechend einer weiteren exemplarischen Ausgestaltung weist die Fahrzeugkomponente eine Radiosendervorrichtung auf, und die spezifischen Informationen weisen Radiosenderinformationen auf.

Diese Ausgestaltung weist den Vorteil auf, dass die Erfindung besonders auf sehr häufig vom Fahrzeugnutzer genutzte Anwendungen des Infotainmentsystems, bei denen auf visuelle Darstellungen im Informationsdisplay leicht verzichtet werden kann, zum Einsparen elektrischer Energie angewendet werden kann.

Entsprechend einer weiteren exemplarischen Ausgestaltung weist das Verfahren ferner auf, dass das Degradieren der Funktionalität der Fahrzeugkomponente ein Begrenzen einer elektrischen Leistungsaufnahme der Fahrzeugkomponente, als eine weitere Energiesparmaßnahme, aufweist.

Dabei kann analysiert werden, welche Funktionen einer Fahrzeugkomponente in welchem Maße aktuell genutzt werden sollen, ohne dass das Informationsdisplay eingeschaltet ist. Je nach Ergebnis der Analyse können dann aktuell nicht genutzte Funktionen beispielsweise stromlos oder in einen Niedrig-Energie-Modus beziehungsweise Stand-By-Modus geschaltet werden, sofern das technisch möglich und anwendungsspezifisch sinnvoll ist. Wohingegen aktuell weiter genutzte Funktionen entsprechend ihrer Nutzungsanforderung, falls dies technisch möglich und anwendungsspezifisch sinnvoll ist, gedrosselt werden.

Diese Ausgestaltung weist den Vorteil auf, dass ein noch geringerer elektrischer Energieverbrauch des Infotainmentsystems während der Fahrzeugnutzung möglich wird.

Entsprechend einer weiteren exemplarischen Ausgestaltung weist das Verfahren ferner auf, dass das Begrenzen der elektrischen Leistungsaufnahme der Fahrzeugkomponente eine Begrenzung auf mindestens 50% der elektrischen Leistungsaufnahme eines Normalbetriebes der Fahrzeugkomponente aufweist.

Diese Ausgestaltung weist den Vorteil auf, dass ein noch geringerer elektrischer Energieverbrauch des Infotainmentsystems während der Fahrzeugnutzung möglich wird.

Entsprechend einer weiteren exemplarischen Ausgestaltung weist das Verfahren ferner ein Begrenzen einer elektrischen Leistungsaufnahme einer Computervorrichtung des Kraftfahrzeuges auf, als eine dritte Energiesparmaßnahme, derart, dass eine Taktfrequenz einer Computer-Prozessor-Einheit der Computervorrichtung um mindestens 50%, vorzugsweise um mindestens 2/3, gedrosselt wird.

Die elektrische Leistungseinsparung durch einen erfindungsgemäßen Low-Power-Modus des Infotainmentsystems beziehungsweise einem deaktivierten Modus des Informationsdisplays kann dadurch signifikant erhöht werden. Der elektrische Leistungsverbrauch eines SoC kann dabei beispielhaft von etwa 14W auf etwa 3W reduziert werden. Beispielhaft kann ein gesamter aktueller Infotainmentsystemverbrauch von derzeit etwa 40W auf etwa 14W reduziert werden.

Diese Ausgestaltung weist den Vorteil auf, dass ein noch wesentlich geringerer elektrischer Energieverbrauch des Infotainmentsystems während der Fahrzeugnutzung möglich wird.

Entsprechend einer weiteren exemplarischen Ausgestaltung weist das Verfahren bei einem erneuten Einschalten des Informationsdisplays ferner auf: Aufheben einer jeden verfahrensgemäßen Energiesparmaßnahme. Rendern der für die Graphikverarbeitung vorgehaltenen spezifischen Informationen. Und visuelles Darstellen der gerenderten spezifischen Informationen auf dem Informationsdisplay.

Diese Ausgestaltung weist den Vorteil auf, dass das Informationsdisplay nach dem erneuten Aktivieren wieder schnellstmöglich mit aktualisierten visuellen Informationen zur Verfügung steht.

Entsprechend einer weiteren exemplarischen Ausgestaltung weist das Verfahren ferner auf, dass jede verfahrensgemäße Energiesparmaßnahme derart erfolgt, dass diese von einem Benutzer des Kraftfahrzeuges nicht wahrnehmbar ist.

Diese Ausgestaltung weist den Vorteil auf, dass die Akzeptanz des Energiesparmaßnahmendienstes im Infotainmentbereich durch den Fahrzeugnutzer signifikant erhöht werden kann.

Ein weiterer Vorteil ist, dass die Nutzung dieses Energiesparmaßnahmendienstes durch den Fahrzeugnutzer signifikant erhöht werden kann.

Entsprechend einer ersten exemplarischen Ausgestaltung weist die Vorrichtung ferner eine Computervorrichtung auf. Die Computervorrichtung weist dabei auf: Eine Betriebssystemvorrichtung, einen Computerdatenspeicher und eine Computer-Prozessor-Einheit. Dabei weist die Betriebssystemvorrichtung ein Betriebssystem der Computervorrichtung auf. Der Computerdatenspeicher ist dazu eingerichtet, zu der Fahrzeugkomponente zugehörige, für eine Graphikverarbeitung vorbereitete, spezifische Informationen gespeichert vorzuhalten. Und die Computer-Prozessor-Einheit ist dazu eingerichtet, die Vorrichtung zu steuern.

Bei der Computervorrichtung im Sinne der Erfindung kann es sich beispielsweise um eine sogenannte System-on-Chip Vorrichtung handeln, auch SoC genannt, wie sie in Embedded Systemen häufig genutzt werden. Dabei kann auf einem integrierten Schaltkreis, einem sogenannten IC, ein Betriebssystem bereits vorgehalten werden. Dieses kann in der Regel von außen per Update und/oder Neuaufspielen verändert werden.

Beispielsweise kann ein sogenannter LGA als Computervorrichtung oder als Teil der Computervorrichtung das SoC und den Computerdatenspeicher, in der Regel einen sogenannten Random-Access-Memory, auch ,RAM' genannt, aufweisen.

Ein Power Management auf dem SoC kann über entsprechende Treiber eingestellt werden. Dadurch kann das SoC sich selbst mit eigener Spannungsversorgungskontrolllogik regeln. Solch ein Power Management kann beispielsweise mittels eines Power Micro-Controllers, einem sogenannten pMiC, vorgenommen werden.

Das SoC kann somit mit Hilfe eines entsprechenden Signales in einen Low-Power-Mode überführt werden.

Somit informiert das SoC per Software den PMiC welche Spannungsebenen das SoC beziehungsweise die Computervorrichtung noch benötigt. Dies kann beispielsweise mittels einer inhärenten Logik im SoC vorgesehen sein.

Diese Ausgestaltung weist den Vorteil auf, dass eine besonders günstige industrielle Vorrichtung genutzt werden kann, um die erfindungsgemäßen Energiesparmaßnahmen, auch erfindungsgemäßer Energiespardienst genannt, technisch zu realisieren.

Entsprechend einer weiteren exemplarischen Ausgestaltung weist die Computervorrichtung der Vorrichtung ferner die Graphik-Prozessor-Einheit des Kraftfahrzeuges auf.

Ferner können noch weitere Chips auf der Computervorrichtung als sogenanntes System-in-Package, SiP genannt, vorhanden beziehungsweise zusammengefasst sein.

Diese Ausgestaltung weist den Vorteil auf, dass diese besonders günstige industrielle Vorrichtung, auch ,Embedded System' beziehungsweise Embedded Lösung' genannt, auch für sonstige Berechnungen für das Infotainmentsystem, außerhalb von Graphikberechnungen, genutzt werden kann.

Häufig sind mittlerweile noch weitere Komponenten im Kraftfahrzeug verbaut, wie beispielsweise Ethernet und WiFi. Während Ethernet im deaktivierten Modus des Informationsdisplays beispielsweise noch aktiv bleiben muss, da es noch verwendet wird, kann es sein, dass WiFi nicht mehr genutzt wird und somit ebenfalls abgeschaltet werden kann, um noch mehr elektrische Energie einzusparen.

Somit können im deaktivierten Modus des Informationsdisplays die Leistungsaufnahmen weiterer Komponenten begrenzt werden, sofern diese im deaktivierten Modus des Informationsdisplays nicht verwendet werden. Diese Komponenten können in eine Art Stand-By-Mode geschaltet werden, um schnellstmöglich wieder verfügbar zu sein. Der gängige Sleep-Mode kann dafür ungeeignet sein, falls dadurch das Aufwachen der Komponenten im Bedarfsfall zu lange dauern würde. Ferner müssen gewisse Komponenten aktiv bleiben, diese können eventuell aber ebenfalls in einen Niedrig-Energie-Modus versetzt werden, wie beispielsweise Ethernet, da das Navigationssystem weiterhin im Hintergrund abgespeckt weiter läuft, also ohne Rendern der Navigationsdaten und Bereitstellen dieser an das Informationsdisplay. Dabei wird das Vehicle Positioning, in der Regel mittels GPS, weiterhin benötigt. Es ist also stets zu prüfen, welche Komponenten abgeschaltet werden können, welche in einem degradierten Modus weiter betrieben werden können, beispielsweise indem sie Leistungsmäßig gedrosselt werden und welche Komponenten bei voller Leistung weiter mitlaufen müssen.

Bislang wurde bei einem Deaktivieren des Informationsdisplays dieses lediglich dunkel geschaltet, um sofort wieder verfügbar zu sein, sobald der Fahrzeugnutzer es wieder aktivieren möchte.

Ein Beispielszenario sah dabei folgendermaßen aus: Der Nutzer fährt aus einer Stadt los und gibt einen Ort in einer weiteren Stadt als Ziel in seinem Navigationssystem ein. Sobald er die Stadt verlassen hat und sich auf der Autobahn befindet, kennt er den Weg bis zur Zielstadt und schaltet entsprechend das Informationsdisplay ab. Die Fahrzeugfunktion, die für die Aufbereitung von Navigationsdaten zuständig ist, erhält während der Fahrt, während das Informationsdisplay dunkel geschaltet ist, weiterhin aktuelle GPS-Koordinaten, und bezieht weiterhin die aktuellen Karten von beispielsweise einer Navigationskarten-DVD oder einer fahrzeuginternen Festplatte. Diese Daten werden dann weiterhin aufbereitet und an die GPU zum Rendern übermittelt. Die GPU rendert die Daten entsprechend und übergibt sie in der Regel über einen Signalwandler zur Darstellung an das Informationsdisplay. Dabei wird ähnlich viel Energie verbraucht, wie wenn das Informationsdisplay nicht schwarz geschaltet würde.

Die vorliegende Erfindung setzt an einem zentralen Bereich des Infotainmentsystems für den Kraftfahrzeugnutzer an. Dieser ist dabei in der Regel das Informationsdisplay. Wird dieses nicht verwendet, kann es beispielsweise in einen Stand-By-Modus versetzt abgeschaltet werden, um Energie zu sparen. Da jedoch dadurch Informationen nicht mehr auf dem Informationsdisplay dargestellt werden müssen, können entsprechende weitere Funktionalitäten, wie beispielsweise die GPU gedrosselt oder ganz abgeschaltet werden. Ferner wird auch die CPU in der Regel dadurch weniger belastet, so dass auch diese in ihrer Leistung gedrosselt werden kann, um noch mehr elektrische Energie einsparen zu können. Dabei soll jedoch weiterhin gewährleistet sein, dass ein Fahrzeugnutzer diejenigen Informationen, die er beim Aktivieren des Informationsdisplays aktuell erwarten kann, auch direkt angezeigt bekommt, ohne dass zunächst alte Darstellungen überschrieben werden müssen, und ohne dass die neuen Informationen erst noch ermittelt werden müssen, um diese anschließend zu rendern und danach auf dem Informationsdisplay darstellen zu können. Dazu sollte beispielsweise eine Graphik-Pipeline geleert und freigehalten werden, um bei Bedarf unmittelbar mit den aktuell gerenderten Informationen befüllt zu werden, damit nach erneutem Einschalten des Informationsdisplays nicht mehr die alten Informationen, sondern bereits die aktuellen Informationen dargestellt werden können. Dazu werden diejenigen Funktionen aktiv gehalten, die weiterhin die stets aktuellen spezifischen Informationen ermitteln und für ein Rendern vorbereitet vorhalten. Dies sind insbesondere das GPS-System, entsprechende Informationsmedien, wie beispielsweise ein DVD-Player oder eine Festplatte (HDD) sowie die entsprechend benötigten Fahrzeugkomponenten, welche darauf basierend ihre spezifischen Informationen ermitteln und für ein Rendern vorbereitet zur Verfügung stellen, damit diese bei Bedarf unmittelbar abgerufen werden können.

Die Problematik liegt somit darin, diejenigen Systemteile zu identifizieren, die stromlos oder in einen Niedrig-Energie-Modus beziehungsweise Stand-By-Modus gehalten werden können. Und dabei dennoch die zum Aktivierungszeitpunkt des Informationsdisplays benötigten spezifischen Informationen aktuell vorbereit vorhalten zu können, damit sie ohne nennenswerte Zeitverzögerung nach erneutem Einschalten des Informationsdisplay auf diesen visuell dargestellt werden können und der Fahrzeugnutzer direkt die aktuell benötigten Informationen ablesen kann.

Im LGA beziehungsweise im SoC findet in der Regel die Berechnung der Navigationsdaten und Displaydaten statt. Der LGA kann dabei beispielsweise die CPU, GPU, Digital-Sound-Processor, auch DSP genannt, Video-Encoder und Video-Decoder und dergleichen hardwaremäßig aufweisen.

Auch der RAM kann in der Regel auf dem LGA außerhalb des SoC untergebracht sein.

Im deaktivierten Modus des Informationsdisplays kann beispielsweise eine Begrenzung der CPU von beispielsweise 1,9GHz um etwa ein Drittel, auf in dem Fall etwa 600MHz stattfinden. Dadurch kann die elektrische Leistungsaufnahme des SoC von beispielsweise etwa 14W auf etwa 3 Watt gedrosselt werden, wodurch signifikant elektrische Energie eingespart werden kann.

Ferner kann die GPU auf dem LGA komplett abgeschaltet werden.

Dennoch erlaubt es die Erfindung im deaktivierten Modus des Informationsdisplays dabei beispielsweise die Navigationsdaten und die Tunersenderlisten von digitalen Radio- und/oder Fernsehsendern aktualisiert vorzuhalten, um diese bei Bedarf schnellstmöglich visuell anzeigen zu können.

Somit sieht die vorliegende Erfindung eine nutzungsabhängige Verbraucheraktivierung vor, deren Basis das Informationsdisplay ist.

Dabei kann vom Kraftfahrzeug und/oder dessen Infotainmentsystem erfasst werden, wie der Fahrzeugnutzer dieses System nutzt und entsprechend reagieren. Beispiele dafür sind: Ist Bluetooth/WLAN aktiv? Ist das Display ein/aus? Ist das Entertainmentsystem aktiv/inaktiv/mute?

Die nichtgenutzten Komponenten werden abgeschaltet oder in einen Stand-By-Modus versetzt, um elektrische Energie zu sparen. Beispielsweise: Bluetooth/WLAN inaktiv => Baustein abschalten; Display nicht mehr schwarz schalten bei ,Aus', sondern abschalten.

Dadurch kann ein aktueller Verbrauch beispielhaft von etwa 40W für das Infotainmentsystem im deaktivierten Modus des Informationsdisplays erfindungsgemäß auf etwa 14W reduziert werden.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines vorgeschlagenen Verfahrens gemäß einer weiteren beispielhaften Ausgestaltung der Erfindung;
Fig. 4 eine schematische Darstellung einer vorgeschlagenen Vorrichtung gemäß einer weiteren beispielhaften Ausgestaltung der Erfindung;
Fig. 5 eine schematische Darstellung einer vorgeschlagenen Vorrichtung gemäß einer weiteren beispielhaften Ausgestaltung der Erfindung;
Fig. 6 eine schematische Darstellung einer vorgeschlagenen Vorrichtung gemäß einer weiteren beispielhaften Ausgestaltung der Erfindung; und
Fig. 7 eine schematische Darstellung eines vorgeschlagenen Kraftfahrzeuges gemäß einer weiteren beispielhaften Ausgestaltung der Erfindung.

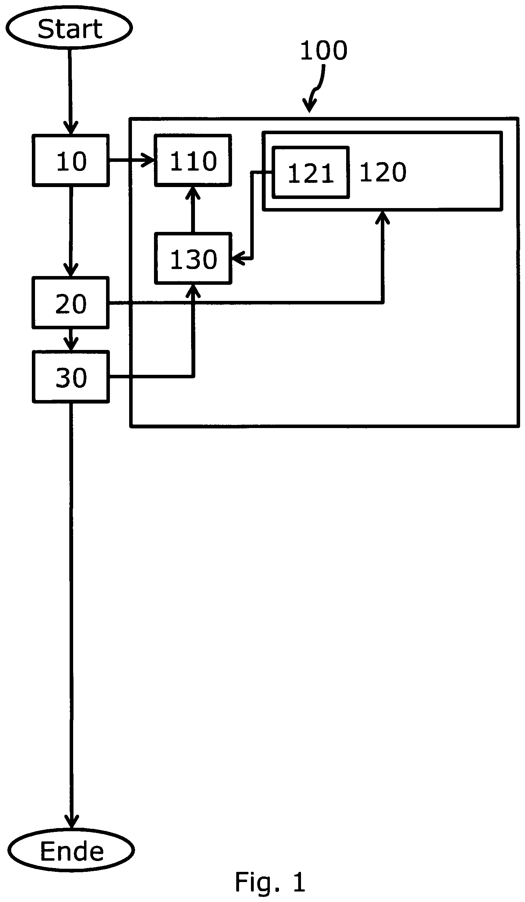

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahrens für einen elektrischen Niedrig-Energie-Betrieb von Kraftfahrzeugfunktionen während des Betriebes eines Kraftfahrzeuges 100. Dabei weist das Kraftfahrzeug 100 ein Informationsdisplay 110 auf. Und dabei weist das Verfahren auf: Deaktivieren 10 des Informationsdisplays 110 des Kraftfahrzeuges 100. Degradieren 20 einer Funktionalität mindestens einer Fahrzeugkomponente 120, welche das Informationsdisplay 110 für eine visuelle Darstellung von spezifischen Informationen 121 der Fahrzeugkomponente 120 nutzt. Und deaktivieren 30 einer Graphik-Prozessor-Einheit 130 des Kraftfahrzeuges 100, als eine Energiesparmaßnahme. Dabei ist die Graphik-Prozessor-Einheit 130 dazu eingerichtet, die spezifischen Informationen 121 der Fahrzeugkomponente 120 derart aufzubereiten, dass diese Informationen 121 auf dem Informationsdisplay 110 visuell darstellbar sind. Und dabei erfolgt das Degradieren 20 der Funktionalität der Fahrzeugkomponente 120 derart, dass die Fahrzeugkomponente 120 ihre zugehörigen spezifischen Informationen 121 weiterhin funktionsgemäß ermittelt und für eine Graphikverarbeitung vorbereitet vorhält.

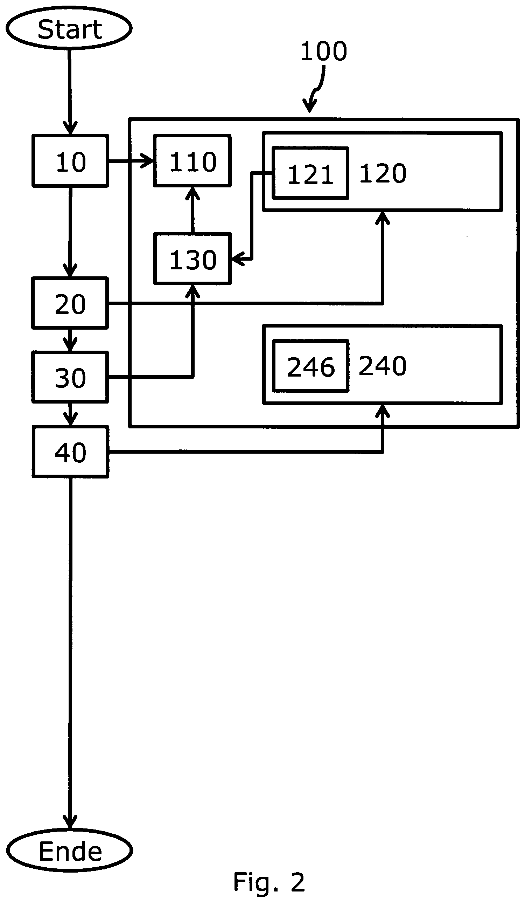

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung einer bezüglich der Fig. 1 weiterentwickelten Vorrichtung. Das zuvor für Fig. 1 Gesagte, gilt daher auch für Fig. 2 fort.

Fig. 2 zeigt das Verfahren aus Fig. 1 bei dem ferner das Verfahren ein Begrenzen 40 einer elektrischen Leistungsaufnahme einer Computervorrichtung 240 des Kraftfahrzeuges 100 aufweist, als eine dritte Energiesparmaßnahme. Dies erfolgt derart, dass eine Taktfrequenz einer Computer-Prozessor-Einheit 246 der Computervorrichtung 240 um mindestens 50%, vorzugsweise um mindestens 2/3, gedrosselt wird.

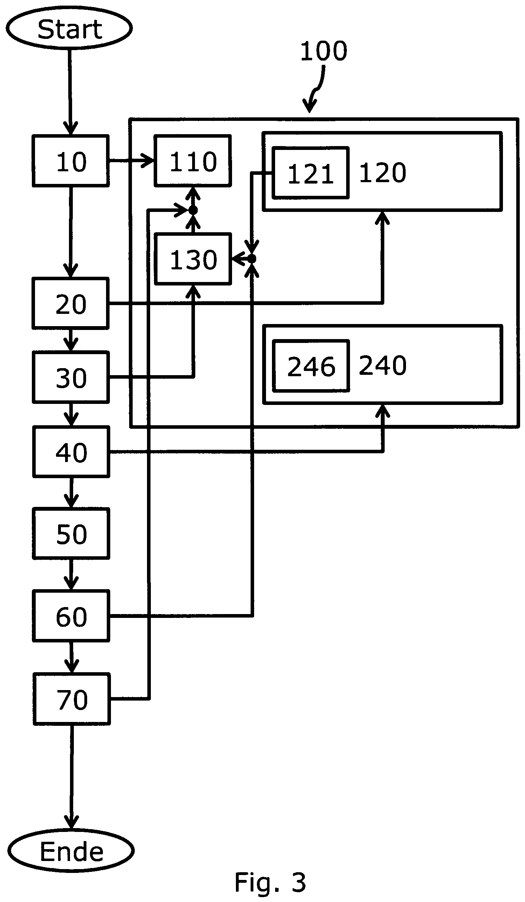

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines bezüglich der Fig. 1 und Fig. 2 weiterentwickelten Verfahrens. Das zuvor für Fig. 1 und Fig. 2 Gesagte, gilt daher auch für Fig. 3 fort.

Fig. 3 zeigt das Verfahren aus Fig. 2 bei dem das Verfahren bei einem erneuten Einschalten des Informationsdisplays 110 ferner aufweist: Aufheben 50 einer jeden verfahrensgemäßen Energiesparmaßnahme. Rendern 60 der für die Graphikverarbeitung vorgehaltenen spezifischen Informationen 121. Und visuelles Darstellen 70 der gerenderten spezifischen Informationen 121 auf dem Informationsdisplay 110.

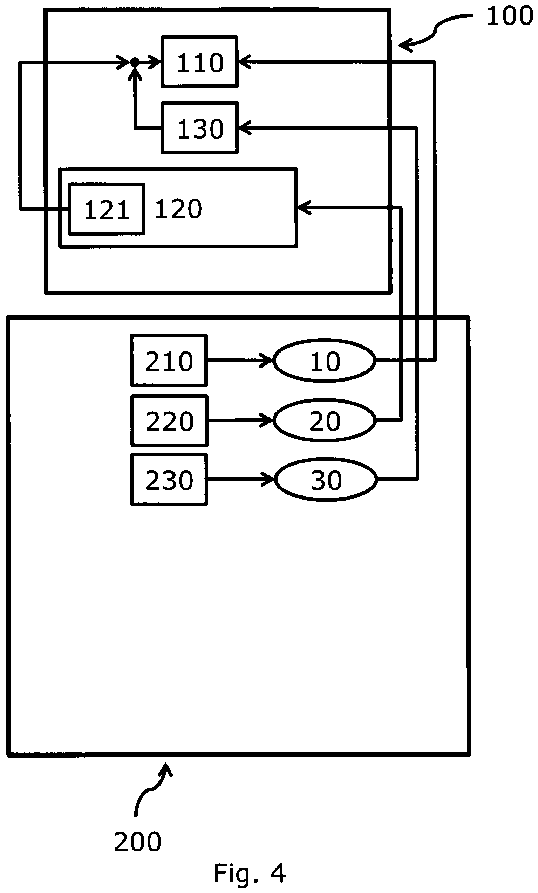

Fig. 4 zeigt eine schematische Darstellung einer vorgeschlagenen Vorrichtung gemäß einer weiteren beispielhaften Ausgestaltung der Erfindung.

Fig. 4 zeigt eine Vorrichtung 200 für einen elektrischen Niedrig-Energie-Betrieb von Kraftfahrzeugfunktionen während des Betriebes eines Kraftfahrzeuges 100. Dabei weist das Kraftfahrzeug 100 ein Informationsdisplay 110 auf. Und dabei weist die Vorrichtung 200 auf: Ein Deaktivierungsmittel 210, zum Deaktivieren 10 des Informationsdisplays 110 des Kraftfahrzeuges 100. Ein Degradierungsmittel 220, zum Degradieren 20 einer Funktionalität mindestens einer Fahrzeugkomponente 120, welche das Informationsdisplay 110 für eine visuelle Darstellung von spezifischen Informationen 121 der Fahrzeugkomponente 120 nutzt. Und ein Deaktivierungsmittel 230, zum Deaktivieren 30 einer Graphik-Prozessor-Einheit 130 des Kraftfahrzeuges 100, als eine Energiesparmaßnahme. Dabei ist die Graphik-Prozessor-Einheit 130 dazu eingerichtet, die spezifischen Informationen 121 der Fahrzeugkomponente 120 derart aufzubereiten, dass diese Informationen 121 auf dem Informationsdisplay 110 visuell darstellbar sind. Und die Vorrichtung 200 ist dazu eingerichtet, ein erfindungsgemäßes Verfahren auszuführen.

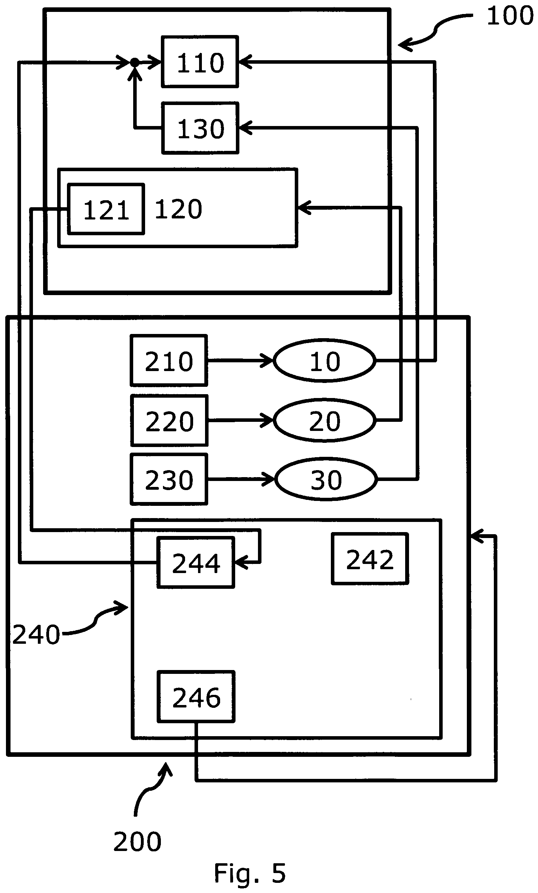

Fig. 5 zeigt eine schematische Darstellung einer vorgeschlagenen Vorrichtung gemäß einer weiteren beispielhaften Ausgestaltung der Erfindung.

Dabei zeigt Fig. 5 eine schematische Darstellung einer bezüglich der Fig. 4 weiterentwickelten Vorrichtung. Das zuvor für Fig. 4 Gesagte, gilt daher auch für Fig. 5 fort.

Fig. 5 zeigt die Vorrichtung der Fig. 4 bei der ferner die Vorrichtung 200 eine Computervorrichtung 240 aufweist. Die Computervorrichtung 240 weist dabei eine Betriebssystemvorrichtung 242, einen Computerdatenspeicher 244 und eine Computer-Prozessor-Einheit 246 auf. Die Betriebssystemvorrichtung 242 weist dabei ein Betriebssystem der Computervorrichtung 240 auf. Der Computerdatenspeicher 244 ist dabei dazu eingerichtet, zu der Fahrzeugkomponente 120 zugehörige, für eine Graphikverarbeitung vorbereitete, spezifische Informationen 121 gespeichert vorzuhalten. Und die Computer-Prozessor-Einheit 246 ist dabei dazu eingerichtet, die Vorrichtung 200 zu steuern.

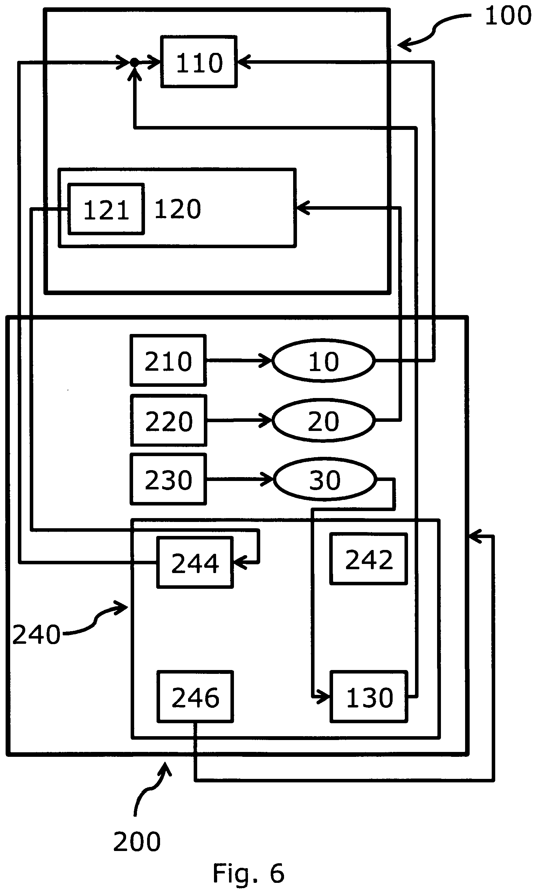

Fig. 6 zeigt eine schematische Darstellung einer vorgeschlagenen Vorrichtung gemäß einer weiteren beispielhaften Ausgestaltung der Erfindung.

Dabei zeigt Fig. 6 eine schematische Darstellung einer bezüglich der Fig. 4 und Fig. 5 weiterentwickelten Vorrichtung. Das zuvor für Fig. 4 und Fig. 5 Gesagte, gilt daher auch für Fig. 6 fort.

Fig. 6 zeigt die Vorrichtung der Fig. 5 bei der ferner die Computervorrichtung 240 der Vorrichtung 200 die Graphik-Prozessor-Einheit 130 des Kraftfahrzeuges 100 aufweist.

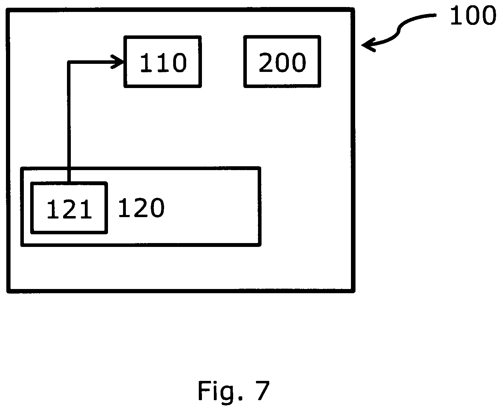

Fig. 7 zeigt eine schematische Darstellung eines vorgeschlagenen Kraftfahrzeuges gemäß einer weiteren beispielhaften Ausgestaltung der Erfindung.

Dabei zeigt Fig. 7 eine schematische Darstellung eines Kraftfahrzeuges 100, aufweisend eine Fahrzeugkomponente 120, wobei die Fahrzeugkomponente 120 dazu eingerichtet ist, spezifische Informationen 121 bereitzustellen. Ferner weist das Kraftfahrzeug 100 ein Informationsdisplay 110 auf, wobei das Informationsdisplay 110 dazu eingerichtet ist, die spezifischen Informationen 121 der Fahrzeugkomponente 120 graphisch darzustellen. Und ferner weist das Kraftfahrzeug 100 eine erfindungsgemäße Vorrichtung 200 auf. Und dabei sind das Kraftfahrzeug 100 und/oder die erfindungsgemäße Vorrichtung 200 dazu eingerichtet, ein erfindungsgemäßes Verfahren auszuführen.

Die Erfindung kann dabei wie nachfolgend zusammengefasst werden:

Die Erfindung beschäftigt sich mit dem Anpassen der Performance und damit des Energieverbrauchs an den Nutzungsgrad / der Systemausnutzung der Headunit. Mithilfe eines sogenannten "Low Performance Modes" soll der Energieverbrauch an die aktuelle Last, also konkret an die Nutzersituation, angepasst werden.

Dies wird einerseits dadurch erreicht, dass in Abhängigkeit bestimmter User-Szenarien einzelne, nicht benötigte elektronische Komponenten innerhalb der Headunit entweder komplett ausgeschaltet oder in einen speziellen "Reset-Mode" mit besonders niedrigem Energieverbrauch geschaltet werden. Des Weiteren wird die CPU/GPU-Einheit entsprechend niedriger getaktet, auf ein Energiebudget limitiert oder ganze Blöcke, wie beispielsweise die GPU, auf der Computervorrichtung, der sogenannten System-on-a-Chip (SoC) Vorrichtung ausgeschaltet. Damit wird ein "Energiesparmodus" geschaffen, der den Gesamtenergieverbrauch lastabhängig anpasst und dadurch reduziert.

Zu den Eingangsgrößen zählen dabei alle Funktionen, welche durch den Nutzer selbst auch ausgeschaltet werden können. Ein den Low-Performance Mode initiierendes Szenario kann beispielsweise das Ausschalten des Displays durch den Nutzer sein.

Die User-Szenarien werden dazu laufend von einem "Agenten" überwacht. Dieser kennt die momentane Systemauslastung und kann entsprechend der User-Szenarien den "Low-Performance-Mode" steuern.

Positive Effekte ergeben sich dann in der erhöhten Reichweite von E-Fahrzeugen sowie im reduzierten CO2-Ausstoß bei konventionellen Fahrzeugen.

### Bezugszeichenliste

- 10: Deaktivieren des Informationsdisplays des Kraftfahrzeuges
- 20: Degradieren einer Funktionalität einer Fahrzeugkomponente
- 30: Deaktivieren einer Graphik-Prozessor-Einheit des Kraftfahrzeuges
- 40: Begrenzen einer elektrischen Leistungsaufnahme einer Computervorrichtung des Kraftfahrzeuges
- 50: Aufheben einer jeden verfahrensgemäßen Energiesparmaßnahme
- 60: Rendern der für die Graphikverarbeitung vorgehaltenen spezifischen Informationen
- 70: Visuelles Darstellen der gerenderten spezifischen Informationen auf dem Informationsdisplay
- 100: Kraftfahrzeug
- 110: Informationsdisplay
- 120: Fahrzeugkomponente
- 121: spezifische Informationen
- 130: Graphik-Prozessor-Einheit
- 200: Vorrichtung für einen elektrischen Niedrig-Energie-Betrieb von Kraftfahrzeugfunktionen während des Betriebes eines Kraftfahrzeuges
- 210: Deaktivierungsmittel
- 220: Degradierungsmittel
- 230: Deaktivierungsmittel
- 240: Computervorrichtung
- 242: Betriebssystemvorrichtung
- 244: Computerdatenspeicher
- 246: Computer-Prozessor-Einheit

## Patentansprüche

1. Verfahren für einen elektrischen Niedrig-Energie-Betrieb von Kraftfahrzeugfunktionen während des Betriebes eines Kraftfahrzeuges (100), wobei das Kraftfahrzeug (100) ein Informationsdisplay (110) aufweist, das dazu eingerichtet ist, gerenderte spezifische Informationen (121) darzustellen, und wobei das Verfahren aufweist:
Deaktivieren (10) des Informationsdisplays (110) des Kraftfahrzeuges (100),
- Degradieren (20) einer Funktionalität mindestens einer Fahrzeugkomponente (120), welche das Informationsdisplay (110) für eine visuelle Darstellung von spezifischen Informationen (121) der Fahrzeugkomponente (120) nutzt, und
- Deaktivieren (30) einer Graphik-Prozessor-Einheit (130) des Kraftfahrzeuges (100), als eine Energiesparmaßnahme, wobei die Graphik-Prozessor-Einheit (130) renderfähig ist und dazu eingerichtet ist, die spezifischen Informationen (121) der Fahrzeugkomponente (120) derart aufzubereiten, dass diese Informationen (121) auf dem Informationsdisplay (110) visuell darstellbar sind, wobei
das Degradieren (20) der Funktionalität der Fahrzeugkomponente (120) derart erfolgt, dass die Fahrzeugkomponente (120) ihre zugehörigen spezifischen Informationen (121) weiterhin funktionsgemäß ermittelt und für eine Graphikverarbeitung vorbereitet vorhält und wobei das für eine Graphikverarbeitung vorbereitete Vorhalten der spezifischen Informationen derart erfolgt, dass die spezifischen Informationen (121) bei Bedarf direkt für die visuelle Darstellung auf dem Informationsdisplay (110) renderbar sind, und wobei das Degradieren (20) der Funktionalität der Fahrzeugkomponente (120) ein Begrenzen einer elektrischen Leistungsaufnahme der Fahrzeugkomponente (120), als eine weitere Energiesparmaßnahme, aufweist.

2. Verfahren gemäß Anspruch 1, wobei die Fahrzeugkomponente (120) eine Navigationsvorrichtung aufweist, und die spezifischen Informationen (121) Navigationskarteninformationen aufweisen.

3. Verfahren gemäß Anspruch 1, wobei die Fahrzeugkomponente (120) eine Radiosendervorrichtung aufweist, und die spezifischen Informationen (121) Radiosenderinformationen aufweisen.

4. Verfahren gemäß Anspruch 1, wobei das Begrenzen der elektrischen Leistungsaufnahme der Fahrzeugkomponente (120) eine Begrenzung auf mindestens 50% der elektrischen Leistungsaufnahme eines Normalbetriebes der Fahrzeugkomponente (120) aufweist.

5. Verfahren gemäß irgendeinem der vorhergehenden Ansprüche, wobei das Verfahren ferner aufweist:
- Begrenzen (40) einer elektrischen Leistungsaufnahme einer Computervorrichtung (240) des Kraftfahrzeuges (100), als eine dritte Energiesparmaßnahme, derart, dass eine Taktfrequenz einer Computer-Prozessor-Einheit (246) der Computervorrichtung (240) um mindestens 50%, vorzugsweise um mindestens 2/3, gedrosselt wird.

6. Verfahren gemäß irgendeinem der vorhergehenden Ansprüche, wobei das Verfahren bei einem erneuten Einschalten des Informationsdisplays (110) ferner aufweist:
- Aufheben (50) einer jeden verfahrensgemäßen Energiesparmaßnahme,
- Rendern (60) der für die Graphikverarbeitung vorgehaltenen spezifischen Informationen (121), und Visuelles Darstellen (70) der gerenderten
- spezifischen Informationen (121) auf dem Informationsdisplay (110).

7. Verfahren gemäß irgendeinem der vorhergehenden Ansprüche, wobei jede verfahrensgemäße Energiesparmaßnahme derart erfolgt, dass diese von einem Benutzer des Kraftfahrzeuges (100) nicht wahrnehmbar ist.

8. Vorrichtung (200) für einen elektrischen Niedrig-Energie-Betrieb von Kraftfahrzeugfunktionen während des Betriebes eines Kraftfahrzeuges (100), wobei das Kraftfahrzeug (100) ein Informationsdisplay (110) aufweist, das dazu eingerichtet ist, gerenderte spezifische Informationen (121) darzustellen, und wobei die Vorrichtung (200) aufweist:
- Ein Deaktivierungsmittel (210), zum Deaktivieren (10) des Informationsdisplays (110) des Kraftfahrzeuges (100), Ein Degradierungsmittel (220), zum Degradieren (20) einer Funktionalität mindestens einer Fahrzeugkomponente (120), welche das Informationsdisplay (110) für eine visuelle Darstellung von spezifischen Informationen (121) der Fahrzeugkomponente (120) nutzt, und
- Ein Deaktivierungsmittel (230), zum Deaktivieren (30) einer Graphik-Prozessor-Einheit (130) des Kraftfahrzeuges (100), als eine Energiesparmaßnahme, wobei die Graphik-Prozessor-Einheit (130) renderfähig ist und dazu eingerichtet ist, die spezifischen Informationen (121) der Fahrzeugkomponente (120) derart aufzubereiten, dass diese Informationen (121) auf dem Informationsdisplay (110) visuell darstellbar sind, wobei
- das Degradieren (20) der Funktionalität der Fahrzeugkomponente (120) ein Begrenzen einer elektrischen Leistungsaufnahme der Fahrzeugkomponente (120), als eine weitere Energiesparmaßnahme, aufweist, und wobei die Vorrichtung (200) dazu eingerichtet ist, ein Verfahren gemäß irgendeinem der vorhergehenden Ansprüche auszuführen.

9. Vorrichtung (200) gemäß Anspruch 8, die Vorrichtung (200) ferner aufweisend:
Eine Computervorrichtung (240), aufweisend:
- Eine Betriebssystemvorrichtung (242),
- Einen Computerdatenspeicher (244) , und
- Eine Computer-Prozessor-Einheit (246),
die Betriebssystemvorrichtung (242) ein Betriebssystem der Computervorrichtung (240) aufweist, der Computerdatenspeicher (244) dazu eingerichtet ist, zu der Fahrzeugkomponente (120) zugehörige, für eine Graphikverarbeitung vorbereitete, spezifische Informationen (121) gespeichert vorzuhalten, und die Computer-Prozessor-Einheit (246) dazu eingerichtet ist, die Vorrichtung (200) zu steuern.

10. Vorrichtung (200) gemäß Anspruch 9, wobei die Computervorrichtung (240) der Vorrichtung (200) ferner die Graphik-Prozessor-Einheit (130) des Kraftfahrzeuges (100) aufweist.

11. Kraftfahrzeug (100), aufweisend:
- Eine Fahrzeugkomponente (120), wobei die Fahrzeugkomponente (120) dazu eingerichtet ist, spezifische Informationen (121) bereitzustellen,
- Ein Informationsdisplay (110), wobei das Informationsdisplay (110) dazu eingerichtet ist, die spezifischen Informationen (121) der Fahrzeugkomponente (120) gerendert graphisch darzustellen, und
- eine Vorrichtung (200) gemäß irgendeinem der vorhergehenden Ansprüche 8 bis 10, und wobei das Kraftfahrzeug (100) dazu eingerichtet ist, ein Verfahren gemäß irgendeinem der vorhergehenden Ansprüche 1 bis 7 auszuführen.

12. Ein Computerprogrammprodukt für eine Vorrichtung gemäß irgendeinem der vorhergehenden Ansprüche 8 bis 10 und/ oder für ein Kraftfahrzeug gemäß Anspruch 11, welches nach einem Verfahren gemäß irgendeinem der vorhergehenden Ansprüche 1 bis 7 betreibbar ist.

13. Ein Datenträger, aufweisend ein Computerprogrammprodukt gemäß Anspruch 12.

## Claims

1. Method for an electrical low-energy operation of motor vehicle functions during the operation of a motor vehicle (100), wherein the motor vehicle (100) comprises an information display (110) that is configured so as to depict rendered specific information (121), and wherein the method comprises:
deactivating (10) the information display (110) of the motor vehicle (100),
- downgrading (20) a functionality of at least one vehicle component (120) that uses the information display (110) to visually depict specific information (121) of the vehicle component (120), and
- deactivating (30) a graphics processing unit (130) of the motor vehicle (100) as an energy-saving measure, wherein the graphics processing unit (130) is capable of rendering and is configured so as to prepare the specific information (121) of the vehicle component (120) such that this information (121) is able to be depicted visually on the information display (110), wherein
the functionality of the vehicle component (120) is downgraded (20) such that the vehicle component (120) continues to functionally determine its associated specific information (121) and retains it in preparation for a graphic processing operation, and wherein the specific information is retained, in preparation for a graphic processing operation, such that the specific information (121) is able to be rendered immediately for the visual depiction on the information display (110) when needed, and wherein
downgrading (20) the functionality of the vehicle component (120) comprises limiting an electric power consumption of the vehicle component (120) as a further energy-saving measure.

2. Method according to Claim 1, wherein the vehicle component (120) comprises a navigation device, and the specific information (121) comprises navigation map information.

3. Method according to Claim 1, wherein the vehicle component (120) comprises a radio transmitter device, and the specific information (121) comprises radio station information.

4. Method according to Claim 1, wherein limiting the electric power consumption of the vehicle component (120) comprises a limitation of at least 50% of the electric power consumption of normal operation of the vehicle component (120).

5. Method according to any one of the preceding claims, wherein the method furthermore comprises:
- limiting (40) an electric power consumption of a computer device (240) of the motor vehicle (100) as a third energy-saving measure, such that a clock frequency of a computer processor unit (246) of the computer device (240) is curtailed by at least 50%, preferably by at least 2/3.

6. Method according to any one of the preceding claims, wherein the method, when the information display (110) is switched on again, furthermore comprises:
- cancelling (50) any energy-saving measure according to the method,
- rendering (60) the specific information (121) retained for the graphic processing operation, and visually depicting (70) the rendered specific information (121) on the information display (110).

7. Method according to any one of the preceding claims, wherein each energy-saving measure according to the method takes place such that it is imperceptible to a user of the motor vehicle (100).

8. Device (200) for an electrical low-energy operation of motor vehicle functions during the operation of a motor vehicle (100), wherein the motor vehicle (100) comprises an information display (110) that is configured so as to depict rendered specific information (121), and wherein the device (200) comprises:
- a deactivation means (210) for deactivating (10) the information display (110) of the motor vehicle (100), a downgrading means (220) for downgrading (20) a functionality of at least one vehicle component (120) that uses the information display (110) to visually depict specific information (121) of the vehicle component (120), and
- a deactivation means (230) for deactivating (30) a graphics processing unit (130) of the motor vehicle (100) as an energy-saving measure, wherein the graphics processing unit (130) is capable of rendering and configured so as to prepare the specific information (121) of the vehicle component (120) such that this information (121) is able to be depicted visually on the information display (110), wherein
- downgrading (20) the functionality of the vehicle component (120) comprises limiting an electric power consumption of the vehicle component (120) as a further energy-saving measure, and wherein
the device (200) is configured so as to execute a method according to any one of the preceding claims.

9. Device (200) according to Claim 8, the device (200) furthermore comprising:
a computer device (240), comprising:
- an operating system device (242),
- a computer data memory (244), and
- a computer processor unit (246),
the operating system device (242) comprises an operating system of the computer device (240),
the computer data memory (244) is configured so as to keep stored specific information (121) associated with the vehicle component (120) and prepared for a graphic processing operation, and
the computer processor unit (246) is configured so as to control the device (200).

10. Device (200) according to Claim 9, wherein the computer device (240) of the device (200) furthermore comprises the graphics processing unit (130) of the motor vehicle (100).

11. Motor vehicle (100), comprising:
- a vehicle component (120), wherein the vehicle component (120) is configured so as to provide specific information (121),
- an information display (110), wherein the information display (110) is configured so as to graphically depict the specific information (121) of the vehicle component (120), and
- a device (200) according to any one of preceding Claims 8 to 10, and wherein
the motor vehicle (100) is configured so as to execute a method according to any one of preceding Claims 1 to 7.

12. Computer program product for a device according to any one of preceding Claims 8 to 10 and/or for a motor vehicle according to Claim 11 that is able to be operated in accordance with a method according to any one of preceding Claims 1 to 7.

13. Data carrier comprising a computer program product according to Claim 12.

## Revendications

1. Procédé pour un fonctionnement électrique à basse consommation de fonctions de véhicule automobile pendant le fonctionnement d'un véhicule automobile (100), le véhicule automobile (100) possédant un écran d'information (110) qui est conçu pour représenter des informations spécifiques (121) rendues, et le procédé comprenant :
désactivation (10) de l'écran d'information (110) du véhicule automobile (100),
- dégradation (20) d'une fonctionnalité d'au moins un composant de véhicule (120) qui utilise l'écran d'information (110) pour une représentation visuelle d'informations spécifiques (121) du composant de véhicule (120), et
- désactivation (30) d'une unité de processeur graphique (130) du véhicule automobile (100), en tant que mesure d'économie d'énergie, l'unité de processeur graphique (130) étant apte à effectuer un rendu et étant conçue pour préparer les informations spécifiques (121) du composant de véhicule (120) de telle sorte que ces informations (121) puissent être représentées visuellement sur l'écran d'information (110),
la dégradation (20) de la fonctionnalité du composant de véhicule (120) s'effectuant de telle sorte que le composant de véhicule (120) continue à déterminer ses informations spécifiques (121) associées conformément à sa fonction et les conserve préparées pour un traitement graphique, et la conservation des informations spécifiques préparées pour un traitement graphique s'effectuant de telle sorte que les informations spécifiques (121) peuvent être rendues directement en cas de besoin pour la représentation visuelle sur l'écran d'information (110), et
la dégradation (20) de la fonctionnalité du composant de véhicule (120) comprenant la limitation d'une consommation d'énergie électrique du composant de véhicule (120), en tant qu'une mesure d'économie d'énergie supplémentaire.

2. Procédé selon la revendication 1, le composant de véhicule (120) comprenant un dispositif de navigation, et les informations spécifiques (121) comprenant des informations de carte de navigation.

3. Procédé selon la revendication 1, le composant de véhicule (120) comprenant un dispositif émetteur radio, et les informations spécifiques (121) comprenant des informations d'émetteur radio.

4. Procédé selon la revendication 1, la limitation de la consommation d'énergie électrique du composant de véhicule (120) comprenant une limitation à au moins 50 % de la consommation d'énergie électrique d'un fonctionnement normal du composant de véhicule (120).

5. Procédé selon l'une quelconque des revendications précédentes, le procédé comprenant en outre :
- limitation (40) d'une consommation d'énergie électrique d'un dispositif informatique (240) du véhicule automobile (100), en tant que troisième mesure d'économie d'énergie, de telle sorte qu'une fréquence d'horloge d'une unité de processeur informatique (246) du dispositif informatique (240) soit réduite d'au moins 50 %, de préférence d'au moins 2/3.

6. Procédé selon l'une quelconque des revendications précédentes, le procédé comprenant en outre, lors d'une remise en marche de l'écran d'information (110) :
- annulation (50) de toute mesure d'économie d'énergie selon le procédé,
- rendu (60) des informations spécifiques (121) conservées pour le traitement graphique, et représentation visuelle (70) des informations spécifiques (121) rendues sur l'écran d'information (110) .

7. Procédé selon l'une quelconque des revendications précédentes, chaque mesure d'économie d'énergie selon le procédé étant réalisée de telle sorte que celle-ci ne puisse pas être perçue par un utilisateur du véhicule automobile (100).

8. Dispositif (200) pour un fonctionnement électrique à basse consommation de fonctions de véhicule automobile pendant le fonctionnement d'un véhicule automobile (100), le véhicule automobile (100) possédant un écran d'information (110) qui est conçu pour afficher des informations spécifiques (121) rendues, et le dispositif (200) comprenant :
- un moyen de désactivation (210) destiné à désactiver (10) l'écran d'information (110) du véhicule automobile (100), un moyen de dégradation (220) destiné à dégrader (20) une fonctionnalité d'au moins un composant de véhicule (120) qui utilise l'écran d'information (110) pour une représentation visuelle d'informations spécifiques (121) du composant de véhicule (120), et
- un moyen de désactivation (230) destiné à désactiver (30) une unité de processeur graphique (130) du véhicule automobile (100), en tant que mesure d'économie d'énergie, l'unité de processeur graphique (130) étant apte à effectuer un rendu et étant conçue pour préparer les informations spécifiques (121) du composant de véhicule (120) de telle sorte que ces informations (121) puissent être représentées visuellement sur l'écran d'information (110),
- la dégradation (20) de la fonctionnalité du composant de véhicule (120) comprenant la limitation d'une consommation d'énergie électrique du composant de véhicule (120), en tant qu'une mesure d'économie d'énergie supplémentaire, et
le dispositif (200) étant conçu pour mettre en œuvre un procédé selon l'une quelconque des revendications précédentes.

9. Dispositif (200) selon la revendication 8, le dispositif (200) possédant en outre :
un dispositif informatique (240), possédant :
- un dispositif de système d'exploitation (242),
- une mémoire de données informatiques (244), et
- une unité de processeur informatique (246),
le dispositif de système d'exploitation (242) comprend un système d'exploitation du dispositif informatique (240), la mémoire de données informatiques (244) est conçue pour conserver en mémoire des informations spécifiques (121) associées au composant de véhicule (120) et préparées pour un traitement graphique, et l'unité de processeur informatique (246) est conçue pour commander le dispositif (200) .

10. Dispositif (200) selon la revendication 9, le dispositif informatique (240) du dispositif (200) comprenant en outre l'unité de traitement graphique (130) du véhicule automobile (100).

11. Véhicule automobile (100), possédant :
- un composant de véhicule (120), le composant de véhicule (120) étant conçu pour fournir des informations spécifiques (121),
- un écran d'information (110), l'écran d'information (110) étant conçu pour représenter graphiquement les informations spécifiques (121) du composant de véhicule (120) rendues, et
- un dispositif (200) selon l'une quelconque des revendications précédentes 8 à 10, et
le véhicule automobile (100) étant conçu pour mettre en œuvre un procédé selon l'une quelconque des revendications 1 à 7.

12. Produit de programme informatique pour un dispositif selon l'une quelconque des revendications précédentes 8 à 10 et/ou pour un véhicule automobile selon la revendication 11, qui peut fonctionner selon un procédé selon l'une quelconque des revendications précédentes 1 à 7.

13. Support de données, comprenant un produit de programme informatique selon la revendication 12.
